# EUROPÄISCHE PATENTSCHRIFT

(11) **EP 1 824 717 B1**
(45) Veröffentlichungstag und Bekanntmachung des Hinweises auf die Patenterteilung: **23.07.2008**
(21) Anmeldenummer: 05801321.0
(22) Anmeldetag: 19.10.2005
(51) Int. Cl.: B60S 1/40

(54) **WISCHBLATT**
WIPER BLADE
RACLETTE D'ESSUIE-GLACE

(30) Priorität: 06.12.2004 DE 102004058685
(43) Veröffentlichungstag der Anmeldung: 29.08.2007
(73) Patentinhaber: ROBERT BOSCH GMBH, 70442 Stuttgart (DE)
(72) Erfinder: KRAEMER, Godelieve, 76549 Huegelsheim (DE)
(86) Internationale Anmeldenummer: PCT/EP2005/055360
(87) Internationale Veröffentlichungsnummer: WO 2006/061284

(56) Entgegenhaltungen:
- WO-A-20/05025956
- DE-A1- 10 040 129
- DE-A1- 10 058 208
- US-A- 6 161 248
- US-B1- 6 634 055

## Beschreibung

### Stand der Technik

Die Erfindung geht von einem Wischblatt nach dem Oberbegriff des Anspruchs 1 aus.

Aus der DE 199 24 662 A1 ist ein Scheibenwischer mit einem Wischblatt bekannt, das über ein so genanntes "Sidelock-System" mit einem Wischarm gelenkig verbunden ist. Hierzu dient ein Anschlusselement, das mit angeformten Formschlusselementen die als Tragelement dienenden Federschienen des Wischblatts seitlich und von unten umfasst. Eine Abdeckkappe aus Kunststoff überdeckt das in der Regel aus Blech gefertigte Anschlusselement, das auch als Blechkralle bezeichnet wird, weil seine angeformten Krallen bei der Montage gegen das Tragelement gepresst werden und so in Längsrichtung des Tragelements durch Kraftschluss gesichert sind. Es sind auch Befestigungen durch Schweißen oder Kleben bekannt. Ein mit dem freien Ende des Wischarms, z.B. einer Wischstange des Wischarms, verbundenes Verbindungselement besitzt einen Lagerstift, der seitlich und quer zur Längsrichtung des Wischarms und zu dem Wischblatt zeigend in das Verbindungselement eingesetzt und vorzugsweise verschweißt oder vernietet ist. Der Lagerstift ist in einer Lagerbohrung des Anschlusselements schwenkbar gelagert. Das Verbindungselement kann gieß- oder spritztechnisch mit dem Lagerstift und einem Sicherungselement in Form eines Bügels separat in einem Stück gefertigt sein und auf das Ende der im Querschnitt rechteckigen Wischstange des Wischarms geschoben und dort befestigt werden.

Parallel zum Lagerstift ist am Verbindungselement in Längsrichtung zum Antriebsende hin versetzt der Bügel angeordnet, der an seinem freien Ende zur Seite des Wischblatts hin abgewinkelt ist. In einer Montageposition, in der das Wischblatt quer zur Längsrichtung des Wischarms gehalten wird, kann der Lagerstift in eine Lagerbohrung des Anschlusselements geschoben werden. Wird das Wischblatt anschließend parallel zur Längsrichtung des Wischarms gedreht, übergreift der Bügel die Abdeckkappe und das Anschlusselement und verriegelt es mit seinem abgewinkelten Ende, sodass seitliche Führungsflächen der Abdeckkappe im montierten Zustand zwischen dem abgewinkelten Ende des Brückenelements und einer gegenüberliegenden Fläche des Verbindungselements geführt werden. Der Bügel taucht in der Betriebsstellung des Wischblatts in eine entsprechende Nut an der Oberseite der Abdeckkappe ein und schließt etwa bündig ab. Zur Demontage muss das Wischblatt in die entgegengesetzte Richtung geschwenkt werden, bis das abgewinkelte Ende außer Eingriff gebracht ist und das Wischblatt vom Lagerstift gezogen werden kann. Das Wischblatt besitzt an seiner Oberseite einen Spoiler. Er erhöht mit zunehmendem Fahrtwind den Anpressdruck des Wischblatts gegen die Fahrzeugscheibe.

Aus der DE 197 57 872 A1 ist ein Scheibenwischer bekannt, dessen Wischarm an seinem freien Ende über eine Gelenkverbindung mit einem gelenkfreien Wischblatt nach Art einer Toplock-Verbindung lösbar verbunden ist. Die Gelenkverbindung besitzt ein erstes Kupplungsteil, das auf einem Tragelement des Wischblatts befestigt ist und an seiner Frontseite eine Gelenkachse in Form zweier seitlich angeordneter Lagerzapfen besitzt. An seinem der Gelenkachse entgegengesetzten Ende hat das erste Kupplungsteil Gegenlagerflächen, die zur Gelenkachse weisen und mit Lagerflächen an einem zweiten Kupplungsteil ein Gegenlager bilden.

Das zweite Kupplungsteil besitzt an seiner Frontseite eine offene Nabe, die in seitlichen Führungswänden vorgesehen ist und in der die Lagerzapfen des ersten Kupplungsteils im montierten Zustand gelagert sind. Das zweite Kupplungsteil ist mit seinem zur offenen Nabe entgegengesetzten Ende an einem Wischarm befestigt. Die offene Nabe weist parallel versetzt zum Wischarm in Richtung seines freien Endes, sodass das am Wischblatt befestigte erste Kupplungsteil parallel zum Wischarm zwischen die seitlichen Führungswände des zweiten Kupplungsteils geschoben werden kann, bis die seitlichen Lagerzapfen an den Lagerflächen der offenen Nabe zur Anlage kommen. Während der Montage werden die zum Gegenlager gehörenden Lagerflächen, die an Federzungen des ersten Kupplungsteils seitlich nachgiebig angeordnet sind, nach innen gedrückt und stellen sich wieder elastisch nach außen in die alte Position zurück, sobald sie die korrespondierenden Lagerflächen an dem zweiten Kupplungsteil passiert haben. Das Gegenlager verhindert, dass die Lagerzapfen im montierten Zustand aus der offenen Nabe gedrückt werden können.

US-B1- 6634055 zeigt den Oberbegriff des Anspruchs 1.

### Vorteile der Erfindung

Nach der Erfindung weist die Anschlussvorrichtung an einer Seite, die einer Kopfleiste der Wischleiste zugewandt ist, eine Kammer auf, deren der Wischleiste benachbarte Wand als federnde Lasche ausgebildet ist. Diese wird im montierten Zustand durch einen Riegel gegen die Kopfleiste gepresst. Der Riegel wird bei der Montage von einer Stirnseite in die Kammer geschoben. Dabei ist es zweckmäßig, dass die Lasche eine Nase besitzt, die im montierten Zustand in die gummielastische Kopfleiste eingreift. Um die Montage des Riegels zu vereinfachen, besitzt dieser an der Stirnseite, die in die Kammer geschoben wird, eine Keilform, deren Flächen geneigt zur Kopfleiste verlaufen. Durch die Keilflächen kann der Riegel leicht in die Kammer eingeführt werden und die Lasche in Richtung auf die Kopfleiste gedrückt werden. Im montierten Zustand liegt die Lasche an einer ebenen Fläche des Riegels an, sodass keine Kraftkomponenten entgegen der Montagerichtung erzeugt werden und den Riegel nach außen drücken. Als zusätzliche Sicherung kann der Riegel Federzungen aufweisen, die mit Rastelementen in Rastvertiefungen der Kammer eingreifen. Dadurch ist der Riegel in axialer Richtung in der Kammer fixiert. Zur Demontage können die Federzungen mit einem Werkzeug zurückgedrückt oder möglicherweise auch von Hand zusammengedrückt werden, sodass der Riegel aus der Kammer entfernt werden kann, sobald die Rastelemente aus ihren Rastvertiefungen zurückgestellt sind.

Durch die erfindungsgemäße Gestaltung der Anschlussvorrichtung ergibt sich eine einfache Montage, bei der auf Schweiß-, Klebe- oder Prägevorgänge im Bereich der Klauen verzichtet werden kann. Ferner kann dadurch die Anschlussvorrichtung aus Kunststoff gefertigt werden, wobei an den Seitenwänden Krallen angeformt sind. Die Seitenwände sind im vorderen Teil durch eine Frontwand miteinander verbunden und bilden am antriebsseitigen Ende mit einer Deckwand die Kammer, die zur Antriebsseite hin offen ist. Die erfindungsgemäße Anschlussvorrichtung benötigt somit keine Abdeckkappe zum Schutz gegen Verschmutzung, Korrosion oder aus Gründen der Aerodynamik oder des Designs. Die Anschlussvorrichtung kann übliche Lagerelemente aufweisen, die zur gelenkigen Verbindung mit dem Wischarm nach dem Sidelock- oder Toplock-Prinzip dienen. Eine vorteilhafte Möglichkeit ergibt sich dadurch, dass an der Frontwand eine quer zum Wischblatt verlaufende Lagerwalze angeformt ist, die zur Kammer hin eine Öffnung für ein entsprechend gebogenes Ende eines Wischarms aufweist. Das Ende des Wischarms wird durch die Öffnung eingefädelt und umfasst die Lagerwalze nach dem Toplock-Prinzip.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine perspektivische Teilansicht einer Wischleiste eines Wischblatts,
- Fig. 2: eine perspektivische Ansicht einer Anschlussvorrichtung,
- Fig. 3: eine perspektivische Ansicht eines Riegels,
- Fig. 4: einen Teillängsschnitt einer Wischleiste und einer Anschlussvorrichtung in einer Explosionsdarstellung,
- Fig. 5: einen Teillängsschnitt einer Wischleiste und einer Anschlussvorrichtung mit einem Riegel vor der Montage,
- Fig. 6: einen Teillängsschnitt einer Wischleiste mit einer montierten Anschlussvorrichtung und
- Fig. 7: einen Schnitt entsprechend der Linie VII-VII in Fig. 6.

### Beschreibung des Ausführungsbeispiels

Das erfindungsgemäße Wischblatt umfasst eine Wischleiste 10 und eine Anschlussvorrichtung 22, die etwa in der Mitte der Wischleiste 10 angeordnet ist und zum gelenkigen Anschluss an einen nicht dargestellten Wischarm nach dem Toplock-Prinzip dient. Es ist allerdings auch möglich, die Anschlussvorrichtung 22 mit einer Lagerbohrung zu versehen, um das Wischblatt nach dem Sidelock-Prinzip gelenkig mit dem Wischarm zu verbinden.

Die Wischleiste 10 besteht im Wesentlichen aus einem Gummiprofil 12 mit einer Wischlippe 16, die über einen Steg 18 mit einer Kopfleiste 14 verbunden ist. In einem zentralen Kanal der Kopfleiste 14 ist eine Federschiene 20 angeordnet, die als Tragelement für die Wischleiste 10 dient und so vorgebogen ist, dass sie unter der Anpresskraft des Wischarms eine geeignete Druckverteilung über die Länge der Wischlippe erzeugt.

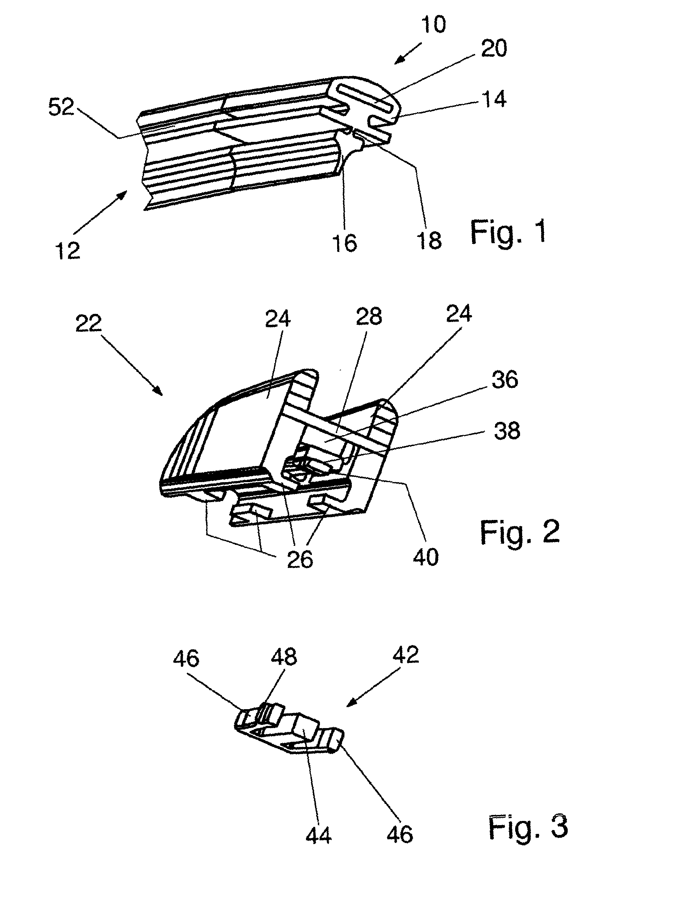

Anstelle einer zentralen Federschiene 20 können auch zwei Federschienen vorgesehen werden, die in zwei seitlichen Nuten der Kopfleiste 14 eingelassen sind. Die Anschlussvorrichtung 22, die grundsätzlich aus einer Blechkralle und einer Abdeckkappe bestehen kann, ist in der Ausführung nach Fig. 2 einstückig und aus Kunststoff gefertigt. An ihren beiden Seitenwänden 24, die durch eine Frontwand 34 und eine Decke 28 miteinander verbunden sind, sind der Kopfleiste 14 zugewandt Krallen 26 angeformt. Diese umfassen die Kopfleiste 14 und die Federschiene 20, indem sie in seitliche Längsnuten 52 des Gummiprofils 12 eingreifen. Die Federschiene 20 und der zugehörige Teil der Kopfleiste 14 sind zwischen den Seitenwänden 24 geführt.

Die Seitenwände 24 und die Deckwand 28 bilden eine zur Stirnseite hin offene Kammer 36, deren parallel zur Kopfleiste 14 verlaufende Wand als federnde Lasche 38 ausgebildet ist. Diese wird bei der Montage durch einen Riegel 42 gegen den Rücken der Kopfleiste 14 gedrückt, sodass die Anschlussvorrichtung 22 zwischen den Krallen 26 und der Lasche 38 festgeklemmt und axial fixiert ist. Die Lasche 38 weist zur Kopfleiste 14 Nasen 40 auf, die sich bei der Montage des Riegels 42 in die Kopfleiste 14 eindrücken und so neben einer kraftschlüssigen Verbindung eine formschlüssige Verbindung herstellen.

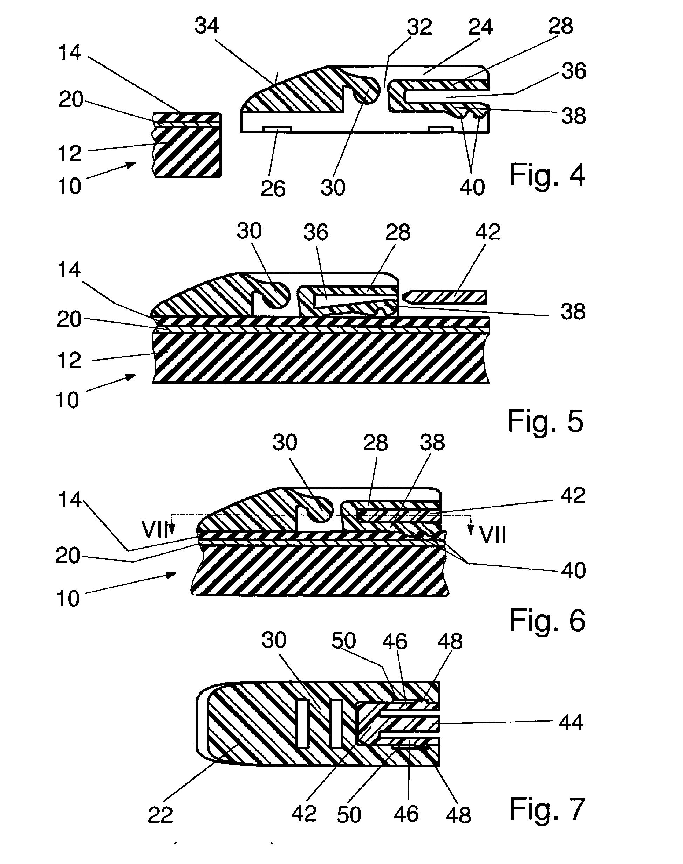

Zur vereinfachten Montage des Riegels 42 ist dieser an der in Montagerichtung vorne liegenden Stirnseite keilförmig zugespitzt, wobei die Keilflächen geneigt zum Rücken der Kopfleiste 14 verlaufen. Dadurch kann mit geringen Kräften die Lasche 38 gegen die Kopfleiste 14 gedrückt werden, während im montierten Zustand die Lasche 38 an ebenen Flächen des Riegels 42 anliegen, sodass dieser während des Betriebs nicht aus der Kammer 36 rutscht. Zusätzlich wird der Riegel 42 zweckmäßigerweise durch Federzungen 46 gesichert, die seitlich eines mittleren Blocks 44 des Riegels 42 verlaufen und mit Rastelementen 48 in Rastvertiefungen 50 der Kammer 36 eingreifen (Fig. 7).

Zur gelenkigen Verbindung mit einem Wischarm dient als Lagerelement eine Lagerwalze 30, die vorzugsweise an der Frontwand 34 dem antriebseitigen Ende zugewandt angeformt und stirnseitig mit den Seitenwänden 24 verbunden ist. Sie bildet zu den Wänden der Kammer 36 eine Öffnung 32, durch die ein entsprechend geformtes Ende des Wischarms eingefädelt werden und die Lagerwalze 30 umfassen kann. Das Ende des Wischarms ist im montierten Zustand seitlich zwischen den Innenseiten der Seitenwände 24 seitlich geführt. Anstelle der Lagerwalze 30 oder zusätzlich kann die Anschlussvorrichtung 22 eine Nabe besitzen, durch die der Wischarm nach dem Sidelock-Prinzip mit dem Wischblatt verbunden werden kann. Besitzt die Anschlussvorrichtung 22 nur eine Nabe, ist es zweckmäßig, dass die Frontwand 34 bis zur antriebsseitigen Stirnwand geführt ist, sodass sich ein weitgehend geschlossenes Design ergibt.

## Patentansprüche

1. Wischblatt, das aus einem Gummiprofil (12) mit einer Wischlippe (16) und mindestens einem Tragelement (20) aufgebaut ist, das über eine Anschlussvorrichtung (22) gelenkig mit einem Ende eines Wischarms verbunden werden kann, wobei die Anschlussvorrichtung (22) mit Krallen (26) das Tragelement (20) seitlich und von der Seite umfasst, die der Wischlippe (16) zugewandt ist, und in axialer Richtung auf einer Wischleiste (10) des Wischblatts gesichert ist, **dadurch gekennzeichnet, dass** die Anschlussvorrichtung (22) an einer Seite, die einer Kopfleiste (14) der Wischleiste (10) zugewandt ist, eine Kammer (36) aufweist, deren der Kopfleiste (14) benachbarte Wand als federnde Lasche (38) ausgebildet ist, die im montierten Zustand durch einen Riegel (42) gegen die Kopfleiste (14) gepresst wird, der von einer Stirnseite in die Kammer (36) geschoben ist.

2. Wischblatt nach Anspruch 1, **dadurch gekennzeichnet, dass** die Lasche (38) eine Nase (40) besitzt, die im montierten Zustand in die Kopfleiste (14) eingreift.

3. Wischblatt nach Anspruch 1 oder 2, **dadurch gekennzeichnet, dass** der Riegel (42) an der Stirnseite, die in die Kammer (36) geschoben wird, eine Keilform besitzt, deren Flächen geneigt zur Kopfleiste (14) verlaufen.

4. Wischblatt nach einem der vorhergehenden Ansprüche, **dadurch gekennzeichnet, dass** der Riegel (42) Federzungen (46) aufweist; die mit Rastelementen (48) in Rastvertiefungen (50) der Kammer (36) eingreifen.

5. Wischblatt nach einem der vorhergehenden Ansprüche, **dadurch gekennzeichnet, dass** die Anschlussvorrichtung (22) Seitenwände (24) besitzt, an denen die Krallen (26) angeformt sind und die im vorderen Teil durch eine Frontwand (34) miteinander verbunden sind und am antriebseitigen Ende mit einer Deckwand (28) die Kammer (36) bilden, die zur Antriebsseite hin offen ist.

6. Wischblatt nach Anspruch 5, **dadurch gekennzeichnet, dass** an der Frontwand (34) eine quer zum Wischblatt verlaufende Lagerwalze (30) angeformt ist, die zur Kammer (36) hin eine Öffnung (32) für ein entsprechend gebogenes Ende eines Wischarms aufweist.

## Claims

1. Wiper blade which is constructed from a rubber profile (12) with a wiper lip (16) and at least one supporting element (20) which can be connected in an articulated manner to one end of a wiper arm via a connection device (22), wherein the connection device (22) surrounds the supporting element (20) laterally and from the side facing the wiper lip (16) by means of claws (26), and is secured in the axial direction on a wiper strip (10) of the wiper blade, **characterized in that**, on a side facing a top strip (14) of the wiper strip (10), the connection device (22) has a chamber (36), the wall of which that is adjacent to the top strip (14) is designed as a resilient clip (38) which, in the fitted state, is pressed against the top strip (14) by a bolt (42) which is pushed into the chamber (36) from an end side.

2. Wiper blade according to Claim 1, **characterized in that** the clip (38) has a lug (40) which, in the fitted state, engages in the top strip (14).

3. Wiper blade according to Claim 1 or 2, **characterized in that** the bolt (42) has, on the end side which is pushed into the chamber (36), a wedge shape, the surfaces of which run in an inclined manner with respect to the top strip (14).

4. Wiper blade according to one of the preceding claims, **characterized in that** the bolt (42) has spring tongues (46) which engage with latching elements (48) in latching depressions (50) in the chamber (36).

5. Wiper blade according to one of the preceding claims, **characterized in that** the connection device (22) has side walls (24) on which the claws (26) are integrally formed and which are connected to each other in the front part by a front wall (34) and, at the drive-side end, form together with a top wall (28), the chamber (36) which is open towards the drive side.

6. Wiper blade according to Claim 5, **characterized in that** a bearing roller (30) is integrally formed on the front wall (34), the bearing roller running transversely with respect to the wiper blade and having, facing the chamber (36), an opening (32) for a correspondingly bent end of a wiper arm.

## Revendications

1. Balai d'essuie-glace formé d'un profil en caoutchouc (12) avec une lèvre d'essuyage (16) et au moins un élément de support (20) relié de façon articulée par un dispositif d'accouplement (22) à une extrémité d'un bras d'essuie-glace,
le dispositif d'accouplement (22) comportant des griffes (26) pour entourer l'élément de support (20) latéralement et par le côté tourné vers la lèvre d'essuyage (16) et fixé dans la direction axiale sur une lame (10) du balai d'essuie-glace,
**caractérisé en ce que**
le dispositif d'accouplement (22) comporte du côté tourné vers un longeron de tête (14) de la lame d'essuyage (10), une chambre (36) dont la paroi voisine du longeron de tête (14) est réalisée sous la forme d'une patte élastique (38) pressée à l'état monté par un verrou (42) contre la lame de tête (14) glissée par un côté dans la chambre (36).

2. Balai d'essuie-glace selon la revendication 1,
**caractérisé en ce que**
la patte (38) comporte un bec (40) qui pénètre dans le longeron de tête (14) à l'état installé.

3. Balai d'essuie-glace selon l'une quelconque des revendications 1 ou 2,
**caractérisé en ce que**
le verrou (42) a une forme de coin sur la face frontale qui est glissée dans la chambre (36) et dont les surfaces sont inclinées par rapport au longeron de tête (14).

4. Balai d'essuie-glace selon l'une quelconque des revendications précédentes,
**caractérisé en ce que**
le verrou (42) comporte des languettes élastiques (46) qui pénètrent avec des éléments d'enclipsage (48) dans les cavités d'enclipsage (50) de la chambre (36).

5. Balai d'essuie-glace selon l'une quelconque des revendications précédentes,
**caractérisé en ce que**
le dispositif d'accouplement (22) comporte des parois latérales (24) sur lesquelles sont formées les griffes (26) reliées l'une à l'autre dans la partie avant par une paroi frontale (34) et à l'extrémité côté entraînement, il forme avec une paroi de couverture (28) la chambre (36) ouverte du côté de l'entraînement.

6. Balai d'essuie-glace selon la revendication 5,
**caractérisé en ce que**
la paroi frontale (34) comporte un cylindre de palier (30) transversal au balai d'essuie-glace et qui comporte une ouverture (32) dirigée vers la chambre (36) pour une extrémité recourbée de façon correspondante d'un bras d'essuie-glace.
